# FASCICULE DE BREVET EUROPEEN

(11) **EP 3 265 435 B1**
(45) Date de publication et mention de la délivrance du brevet: **22.06.2022**
(21) Numéro de dépôt: 16714993.9
(22) Date de dépôt: 02.03.2016
(51) Int. Cl.: C03C 15/00, C03C 17/34, C03C 17/28

(54) **PROCEDE DE REALISATION DE RELIEF SUR UN ARTICLE EN VERRE CREUX ET ARTICLE EN VERRE CREUX AINSI OBTENU**
VERFAHREN ZUR HERSTELLUNG VON RELIEFSTRUKTUREN AUF EINEM HOHLEN GLASKÖRPER UND DAMIT HERGESTELLTER HOHLER GLASKÖRPER
METHOD FOR PRODUCING RELIEF STRUCTURES ON A HOLLOW GLASS OBJECT AND HOLLOW GLASS OBJECT THUS PRODUCED

(30) Priorité: 02.03.2015 FR 1551759
(43) Date de publication de la demande: 10.01.2018
(73) Titulaire: Saverglass, 60960 Feuquieres (FR)
(72) Inventeur: MEHAUX, Daniel, 77120 Mouroux (FR)
(74) Mandataire: Novagraaf Technologies
(86) Numéro de dépôt international: PCT/FR2016/050474
(87) Numéro de publication internationale: WO 2016/139421

(56) Documents cités:
- EP-A1- 0 289 325
- WO-A1-2006/027479
- FR-A1- 2 465 693
- US-A1- 2013 107 370

## Description

### Domaine technique

La présente invention se rapporte à un procédé de réalisation de relief sur un article en verre creux, en particulier à des fins de décoration. Elle concerne également l'article en verre creux ainsi obtenu.

### Etat de la technique

Les domaines de l'industrie alimentaire et de l'industrie cosmétique utilisent depuis longtemps des articles en verre creux, tels que des flacons pour contenir en particulier des liquides tels que des boissons alcoolisées ou non, des lotions, des crèmes ou des parfums. Le terme de flacon désigne ici de manière générique des contenants en verre tels que les pots, les gobelets, les carafes et les bouteilles. Il est fréquent d'appliquer sur de tels articles en verre des impressions afin de donner des informations et de réaliser des décorations. Dans le cas des impressions, on utilise typiquement des techniques de sérigraphie, de transfert telles que la décalcomanie, la tampographie ou le jet d'encre. Dans le cas de revêtements larges, de la matière est déposée en film mince par pulvérisation. Dans les deux cas, les revêtements sont composés par exemple par des encres, des peintures ou des vernis à base de résines organiques. Les résines polymérisent une fois appliquées sur le flacon, par exemple par exposition à la chaleur ou aux rayonnements ultraviolets ou après séchage physique. Certaines résines, à polymérisation mixte, sont sensibles à la fois à la chaleur et aux rayonnements ultraviolets. Les résines peuvent être par exemple de nature époxy, acrylique ou polyuréthane.

Les revêtements peuvent également être non organiques, tels que des revêtements émaillés. De tels revêtements sont appliqués sous la forme d'une pâte contenant les minéraux sous forme de fritte et un liant organique. Après passage dans un four, le liant est calciné et les minéraux se lient et forment l'émail à la surface de l'article.

D'autres revêtements sont essentiellement métalliques. Pour cela, on utilise par exemple une composition contenant des pâtes organométalliques, avec des métaux sous forme cationique. La composition est déposée sur la surface de l'article et on réalise une réduction des cations métalliques qui prennent alors une forme cristalline et réfléchissante. Ce procédé s'applique en particulier à l'or, à l'argent ou à des alliages de ces métaux ou d'autres métaux. Le document US 2,490,399 montre un exemple d'une telle technique.

Ces revêtements sont appliqués sur l'article, par exemple par sérigraphie. On obtient ainsi la possibilité de faire une application localisée et une grande finesse des décors.

Parmi les effets décoratifs qui sont réalisés, on trouve l'aspect satiné de la surface extérieure du flacon, appelé aussi aspect givré. Historiquement, cet aspect est obtenu par un dépolissage de la surface grâce à une attaque chimique, avec une solution contenant en particulier de l'acide et des sels, tels que de l'acide fluorhydrique, des sels d'ammonium, ainsi qu'un co-acide, généralement de l'acide sulfurique ou chlorhydrique. Généralement, la totalité de la surface extérieure du flacon est dépolie par ce procédé, hormis la bague. Un autre procédé connu est le sablage qui crée des microrugosités à la surface du verre par action mécanique.

Il est possible de créer des décors par dépolissage partiel en appliquant un vernis qui forme un masque sur des zones qui ne seront pas attaquées et qui resteront lisses. On forme ainsi des sortes de fenêtres par lesquelles l'intérieur du flacon reste visible tandis que le reste de la surface est rendu translucide. Le vernis est ensuite éliminé, par exemple par voie chimique avec une attaque avec une base forte telle que la soude, ou par voie mécanique grâce à des jets d'eau sous pression. Les fenêtres retrouvent ainsi la transparence du verre comme à l'origine. Ainsi, le document WO 2013/189762 propose de déposer des masques sur un article en verre plat par impression à jet d'encre. L'encre ainsi déposée forme un masque qui protège la surface du verre lors d'une opération de dépolissage acide ou basique. Le masque est ensuite retiré en laissant apparaitre des zones lisses qui n'ont pas été attaquées et des zones dépolies qui ont été modifiées par le traitement chimique. FR-2465693 décrit un procédé de dépolissant chimique d'un verre comprenant (i) une étape d'immersion dans un bain de dégraissage puis de dépolissage a base d'acide, (ii) une étape de rinçage a l'eau et séchage, puis (iii) une étape d'application d'un vernis avant séchage au four. L'utilisation de masques chimiquement résistants préalablement appliques sur le verre permet la création de parties transparentes sur le fond dépoli.

Toutefois tous les décors cités ci-dessus ne confèrent aucun relief perceptible optiquement et tactilement. Par exemple, un dépolissage chimique partiel avec masque (pour créer une fenêtre transparente), qui comporte une unique opération de rinçage, ne crée qu'une rugosité Ra comprise entre 0,5 à 1,0 micron et ne génère aucun relief perceptible visuellement et tactilement quelle que soit la durée de trempage des articles en verre dans le bain de dépolissage, la formation rapide de dépôts de cristaux de fluorosilicates d'ammonium à la surface du verre bloquant son attaque chimique. Il en est de même par exemple pour un décor à l'or pour lequel on parle de quelques dizaines de nanomètres d'épaisseur obtenus après cuisson d'une pâte organométallique à la surface du verre. En ce qui concerne des décors à l'encre organique ou à l'émail, on se situe de manière générale dans une fourchette de 8 à 15 microns d'épaisseur.

Certains décors permettent toutefois de créer un relief limité par rapport à la surface lisse de l'article en verre. C'est le cas par exemple d'un procédé de réalisation de décors par applications et cuissons successives d'un émail transparent et d'une pâte organométallique d'or (procédé communément appelé « or sur flux »). On procède ainsi :
- application d'une couche d'émail transparente puis cuisson aux alentours de 620 °C,
- application de la pâte organométallique d'or sur la couche d'émail et son pourtour, puis cuisson modérée entre 580 et 600 °C ,le décor à l'or n'adhérant *in fine* qu'à la surface de la couche d'émail ;
- lavage manuel du décor métallique excédant la zone sérigraphiée.

Les décors tels que décrits précédemment nécessitent des étapes longues et fastidieuses. L'étape de lavage manuel est en particulier délicate.

Par ailleurs tous les décors obtenus par dépôt sur le verre sont limités en épaisseur (moins de 25 µm).

On réalise quelquefois des reliefs sur un flacon par soufflage dans un moule en fonte généralement réalisé en 2 parties jointives, l'empreinte interne de celles-ci comportant dans ce cas des cavités avec dépouilles de démoulage qui correspondent aux reliefs à créer. Cependant, les contraintes pour de tels reliefs sont très importantes, en particulier celles de la nécessité d'obtenir le démoulage sans cassure locale du verre, que l'on appelle glaçures, et qui interdit d'avoir des cavités à proximité des joints de moule. De telles cavités, suivant leur position et leur profondeur, peuvent même amener à un démoulage impossible de l'article en verre. En outre la viscosité du verre utilisée dans un tel processus ne permet pas le comblement de motifs fins usinés à la surface interne des moules de formage. Enfin, un tel processus nécessite un graissage graphite régulier et significatif des gravures usinées dans le moule, ce qui engendre leur obstruction progressive par formation de calamine, un besoin de nettoyage fréquent de la partie interne des moules, une forte variabilité géométrique du résultat, ainsi que des défauts à la surface des reliefs élaborés. De ce fait, la finesse de tels reliefs est limitée et la production de reliefs à la périphérie du corps d'un article en verre s'avère impossible.

### Description de l'invention

L'invention vise à fournir un procédé de réalisation d'un article en verre creux comportant sur sa surface externe des reliefs atteignant des hauteurs significatives et reproductibles avec de multiples possibilités de finesse et de rendu esthétique, de tels reliefs pouvant être positionnés dans n'importe quelle zone de la surface externe de l'article en verre.

Avec ces objectifs en vue, l'invention a pour objet un procédé de réalisation de relief sur un article en verre creux silicosodocalcique, caractérisé en ce qu'on procède aux étapes suivantes :
a) application d'un masque résistant à l'attaque d'acides sur des zones à protéger de l'article en verre creux ;
b) application d'une suite de cycles, chaque cycle comprenant : b1) une phase d'attaque acide apte à dissoudre le verre sur les zones non protégées ; et b2) une phase de rinçage pour éliminer le verre dissous et les résidus de l'attaque acide ;
c) élimination du masque.

La présente invention présente l'avantage de réaliser des décors en relief d'épaisseur maitrisée et pouvant varier d'une vingtaine à plusieurs centaines de micromètres en fonction du nombre de cycles d'attaque chimique et de rinçage de surface successifs réalisés, chaque cycle permettant de dissoudre de manière reproductible une épaisseur de verre comprise entre 2 et 20 µm, et typiquement 10 µm. Des reliefs jusqu'à 750 µm ont pu ainsi être obtenus. Le masque peut être du même type que celui utilisé pour des opérations de satinage sélectif. Il est par exemple appliqué par sérigraphie sous la forme d'une encre organique qui est ensuite polymérisée par cuisson, de préférence thermique, ou par exposition aux ultraviolets. Son retrait est obtenu par exemple par dissolution dans une solution de soude ou par l'action mécanique de jets à haute pression.

L'alternance de phases d'attaque et de rinçage permet d'éliminer cycliquement les résidus d'attaque chimique du verre non solubilisés dans le milieu acide d'attaque chimique, essentiellement des fluorosilicates de sodium et de calcium, qui se déposent sur la surface attaquée et ont tendance à ralentir la dissolution du verre jusqu'à la bloquer. Elle permet également d'obtenir une attaque anisotropique contrairement à ce qu'indique la littérature. En effet, la thèse « Développement et étude d'une technique de microsablage à haute résolution » n° 3293 (2006) de l'école polytechnique fédérale de Lausanne par Anne-Gabrielle Pawlowski explique que l'attaque acide d'un verre de silice pure partiellement masqué est du type isotropique et qu'une partie du verre sous-jacent au masque est de ce fait dissout. Ce phénomène peut même d'ailleurs être exploité afin d'obtenir une pente faible entre la zone attaquée et la zone préservée en prévoyant une couche intermédiaire entre le masque et le verre apte à se dissoudre progressivement. Or un tel phénomène n'a pas été observé avec le procédé selon l'invention. La zone sous le masque reste entière sans être dissoute et le masque conserve parfaitement sa géométrie jusqu'à son élimination. En effet, la chimie spécifique du verre utilisé conduit à des dépôts de fluorosilicates insolubles et ceux formés en bordure du masque s'avèrent moins accessibles aux rinçages successifs que le reste de la surface du verre attaquée, si bien que l'attaque chimique du verre sous le masque est bloquée, et produit *in fine* un relief géométriquement équivalent au masque déposé. Pour ce faire, dans le cadre de la présente invention, on utilise un verre silicosodocalcique, i.e. un verre produisant notamment au cours de sa dissolution des quantités importantes de fluorosilicates de sodium et de calcium peu solubles dans le milieu d'attaque chimique, qui permet de générer une attaque chimique anisotropique en bordure du masque afin de préserver la géométrie de ce dernier jusqu'à son extraction finale. Ce phénomène ne peut pas être observé à partir d'un verre de silice pure pour lequel une attaque chimique à l'acide fluorhydrique ne produit qu'une espèce soluble dans le milieu liquide d'attaque chimique : l'acide hexafluorosilicique.

La technique ici employée autorise une grande liberté dans la géométrie des reliefs à créer. Dans le cas d'un flacon, on peut créer les reliefs sur toute la périphérie. La finesse des dessins est grande, avec par exemple des reliefs d'une largeur inférieure à 0,2 mm ou séparés entre eux de moins de 0,2 mm. Le procédé autorise également la fabrication de pièces à l'unité, en appliquant un masque spécifique par pièce. Le masque pourrait par exemple être déposé par une technique à jets d'encre, et donc composé spécifiquement pour chaque unité.

Il est à noter que le procédé selon l'invention produit, au-delà des décors en relief cités ci-dessus, un article en verre de surface beaucoup plus brillante qu'avant traitement chimique, la surface originelle des articles étant dotée de multiples micro-défauts liés aux limites du processus de formage en verrerie : les faces internes des moules en fonte affichent en effet une rugosité variable liée à leur usure progressive et à la présence d'impuretés liées à leur graissage régulier (calamine).

Selon d'autres caractéristiques particulières de mise en œuvre de la présente invention :
- la phase d'attaque b1) est un trempage de l'article dans un bain acide de polissage chimique d'une durée comprise entre 5 et 20 secondes, de préférence 10 secondes. Il est à noter que la vitesse d'attaque chimique du verre diminue de manière hyperbolique en fonction du temps du fait de la formation d'une couche passive chargée en fluorosilicates insolubles à la surface de l'article dans le bain, cette couche diminuant progressivement l'accessibilité de la surface de l'article en verre au réactif assurant son attaque chimique, l'acide fluorhydrique. Des temps de trempage avant rinçage plus longs ont le désavantage de solliciter chimiquement le masque et de mettre en péril son intégrité tout en produisant un gain limité de dissolution du verre, des difficultés d'extraction de la couche passive créée au cycle de rinçage suivant l'opération de trempage, et des défauts de surface consécutifs à cette extraction de matière imparfaite au cours des cycles de trempage / rinçage. Au-delà d'un équilibre entre vitesse d'attaque chimique de la surface de l'article en verre et sollicitation chimique du masque, des cycles de trempage relativement courts confèrent un niveau de régénération du bain de polissage en phase avec une stabilisation du processus d'attaque chimique (compensation régulière et efficace des pertes de matières premières dans le bain de polissage, de telles pertes provenant de l'attaque chimique de la surface des articles en verre et des multiples transferts de matières dans l'eau de rinçage des articles : acide fluorhydrique, co-acide, eau).
- la phase de rinçage b2) est réalisée à l'eau. Ce liquide est parfaitement adapté à l'efficacité souhaitée. L'eau de rinçage est de préférence utilisée en boucle fermée pour des raisons essentiellement écologiques. L'eau qui a été utilisée pour rincer l'article est récoltée et à nouveau pompée pour être projetée sur l'article. On constitue ainsi une réserve d'eau. Celle-ci peut être renouvelée, de préférence partiellement, soit en continu, soit périodiquement, afin d'éliminer les résidus du rinçage et de limiter la charge de l'eau en résidus, qu'il s'agisse des acides entraînés par les articles ou des particules solides issues la dissolution du verre ayant lieu à la fois au cours du trempage dans le bain de polissage et au cours du transfert aérien des articles en verre du bain de polissage au poste de rinçage.
- la phase de rinçage b2) a une durée comprise entre 5 et 15 secondes, de préférence 10 secondes. Un rinçage insistant et trop puissant a tendance à dégager complètement la bordure du masque des dépôts de silicates insolubles formés localement de sorte que l'attaque acide au cycle suivant est particulièrement efficace à proximité du masque. Dans un tel cas, la pente obtenue à la bordure du masque est particulièrement abrupte, ce qui n'est pas souhaitable car elle confère un effet tactile désagréable du relief finalement obtenu après les multiples cycles d'attaque chimique et de rinçage. En limitant la durée, le débit et la pression du rinçage, on constate que la pente issue de la bordure est plus faible, de sorte que la bordure est plus douce au toucher. On explique une telle attaque anisotropique de la bordure du masque par l'extraction partielle locale durant l'étape de rinçage de la couche passive essentiellement constituée de fluorosilicates insolubles dans le milieu d'attaque chimique. On constate aussi, dans le cas où l'eau de rinçage est utilisée en boucle fermée, que la qualité du liquide de rinçage a une forte influence sur la géométrie de la bordure. En effet, si le liquide de rinçage contient une part trop importante de résidus d'attaque, par exemple ceux apportés par le rinçage des articles précédents, le rinçage perd son efficacité. Il est recommandé de maintenir un contenu en extrait sec du liquide de rinçage inférieur à 2% en masse.
- la phase d'attaque acide est réalisée dans un bain comportant de l'acide fluorhydrique et un co-acide fort.
- le co-acide est choisi dans un groupe comprenant l'acide sulfurique, l'acide nitrique et l'acide chlorhydrique ou l'un de leurs mélanges. Ces acides sont tous efficaces dans la dissolution du verre, en agissant comme catalyseur de son attaque chimique par l'acide fluorhydrique. Cependant, on privilégie l'acide sulfurique pour plusieurs raisons. D'abord le bain ainsi obtenu a une viscosité qui confère une bonne adhérence de la couche humide à la surface de l'article lorsqu'il est retiré du bain de polissage chimique. Ensuite la viscosité de cette couche humide, qui reste toujours active chimiquement après extraction de l'article du bain de polissage, permet d'éviter toute fracturation d'une telle couche pendant le transfert aérien de l'article au poste de rinçage, laquelle provoquerait des défauts de surface locaux irréversibles avant les opérations cycliques de rinçage tout comme des coulures excessives locales. Par ailleurs, l'acide sulfurique a une très faible propension à s'évaporer, ce qui facilite la mise en œuvre du bain en milieu industriel. Enfin, les effluents inévitablement générés et contenant des sulfates sont plus facilement gérés en station d'épuration que ceux contenant des nitrates ou des composés chlorés.
- le co-acide est de l'acide sulfurique et le rapport entre la masse d'acide sulfurique et la masse d'acide fluorhydrique est compris entre 1,8 et 18.
- le bain d'acide comporte entre 30 et 70% massique d'acide sulfurique afin d'éviter des problèmes de rinçage et des défauts de surface en périphérie du masque, entre 3 et 17% massique d'acide fluorhydrique suivant le niveau de productivité requis, et un complément d'eau.
- la température du bain d'acide est comprise entre 15 et 75°C, de préférence entre 20 et 45 °C pour obtenir un bon équilibre entre vitesse d'attaque chimique du verre et évaporation de l'acide fluorhydrique. On limite ainsi l'évaporation de l'acide léger et actif vis-à-vis du verre, l'acide fluorhydrique, tout en obtenant une bonne vitesse d'attaque acide du verre.
- l'article est revêtu d'une couche d'accrochage avant l'application du masque, la couche d'accrochage étant composée d'un organo-silane, par exemple l'aminopropyltriethoxysilane (AMEO). Un tel primaire permet d'augmenter la résistance chimique et mécanique du masque pendant les multiples opérations d'attaque chimique et de rinçage qui suivront, de manière à éviter des décollements partiels, notamment en périphérie du masque. En effet, le masque est soumis à de fortes contraintes mécaniques et chimiques, surtout lorsqu'on souhaite réaliser des reliefs de hauteur importante. Les essais ont montré que l'ajout d'un tel primaire était de nature à augmenter de manière significative et suffisante la durabilité du masque, grâce au pontage chimique ainsi créé entre le masque et le support, et à préserver les propriétés du masque (adhérence, étanchéité) pendant tout le procédé quand il est appliqué sur un support minéral ou métallique.
- l'article est revêtu d'une couche de préparation avant l'application du masque, la couche de préparation étant un dépôt de silice à la flamme. Un précurseur contenant du silicium tel qu'un silicone est introduit dans une flamme dirigée vers la surface à traiter. Le silicium se dépose sur la surface sous forme de nanoparticules de silice, créant ainsi une microrugosité sur celle-ci ne nuisant pas à la brillance de la surface, et une augmentation de la tension superficielle du substrat favorisant le mouillage ultérieur du masque. Un tel dépôt peut être appliqué seul ou avant l'application de la couche d'accrochage telle que décrite précédemment, le nombre de sites de pontage chimique avec l'organosilane s'avérant augmenté par le dépôt de silice préalable, dépôt exempt des traces de pollutions que l'on peut observer à la surface d'un article en verre produit dans l'industrie. La couche de préparation peut avantageusement être déposée sur des décors tels que décrits ci-dessous pour permettre la tenue de la couche d'accrochage. Dans le cas d'un décor organique, seule cette couche de préparation permet d'améliorer l'adhérence du masque. Cette adhérence peut en outre être encore augmentée par la combinaison de la couche de préparation sur laquelle est appliquée la couche d'accrochage à base d'organosilane.
- l'article est satiné avant l'étape de masquage par un satinage chimique ou mécanique. On obtient ainsi un article dont les zones en relief sont dépolies et dont les zones en creux sont lisses et polies.
- l'étape de masquage a) est précédée d'une étape de dépose de décors sur le verre, le masque étant appliqué sur les décors. Le masque permet de protéger le décor préalablement réalisé, et de le révéler après les étapes d'attaque acide et d'extraction finale du masque. On peut ainsi obtenir des décors qui font saillie de zones lisses et polies.
- le décor est par exemple un revêtement d'encre organique, un émail métallisé ou non, ou une couche métallisée.
- l'article est satiné chimiquement entre l'étape d'attaque acide b) et l'étape d'élimination du masque. Ainsi les zones creusées par le procédé selon l'invention sont dépolies et les zones en relief sont lisses et polies ; on peut créer ainsi des fenêtres transparentes en relief sur les articles en verre.
- on procède après l'enlèvement du masque à une étape de polissage chimique sur l'ensemble de la surface de l'article. Cette opération optionnelle présente l'avantage de maintenir la hauteur du relief tout en adoucissant tactilement la bordure des reliefs. L'expérience montre que 5 cycles complémentaires de polissage / rinçage tels que décrits précédemment (soit environ 50 microns complémentaires de dissolution générale de la surface du verre) améliore de manière très significative le toucher d'un relief d'épaisseur de 250 microns.

Selon une variante du procédé de la présente invention, le procédé peut comprendre en outre une étape intermédiaire a'), entre l'étape a) et l'étape b), dans laquelle on procède à une extraction partielle du masque appliqué sur la surface de l'article en verre. Par exemple le masque est appliqué sur l'intégralité de la surface de l'article en verre par pulvérisation au pistolet pneumatique conventionnel ou électrostatique, par bol ou disque électrostatique, par trempage, ou par flow coating. Par exemple, l'extraction partielle est réalisée par projection locale de média organique ou par ablation laser, afin de déprotéger une ou plusieurs zones de l'article en verre protégée(s) initialement par l'application du masque.

L'invention a aussi pour objet un article obtenu selon un procédé tel que décrit précédemment.

Elle concerne en particulier un article comportant des zones dépolies en relief par rapport à des zones lisses et polies. Aucun procédé connu ne permet d'obtenir un tel article.

### Brève description des figures

L'invention sera mieux comprise et d'autres particularités et avantages apparaîtront à la lecture de la description qui va suivre, la description faisant référence aux dessins annexés parmi lesquels :
- la figure 1 est une vue schématique des étapes du procédé selon un premier mode de réalisation de l'invention ;
- la figure 2 est une vue schématique des étapes du procédé selon un deuxième mode de réalisation de l'invention ;
- la figure 3 est une vue schématique des étapes du procédé selon un troisième mode de réalisation de l'invention ;
- la figure 4 est une vue d'un article obtenu selon le procédé de la figure 3 ;
- la figure 5 est une vue en microscopie optique avec reconstruction en trois dimensions du détail V de la figure 4 ;
- la figure 6 est une vue schématique des étapes du procédé selon une variante du premier mode de réalisation de l'invention.

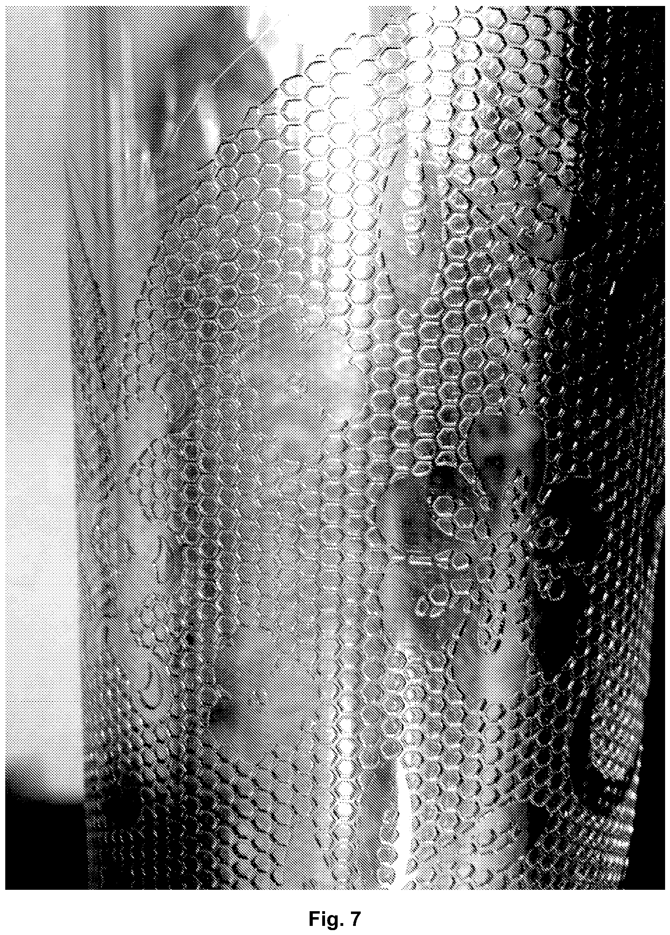

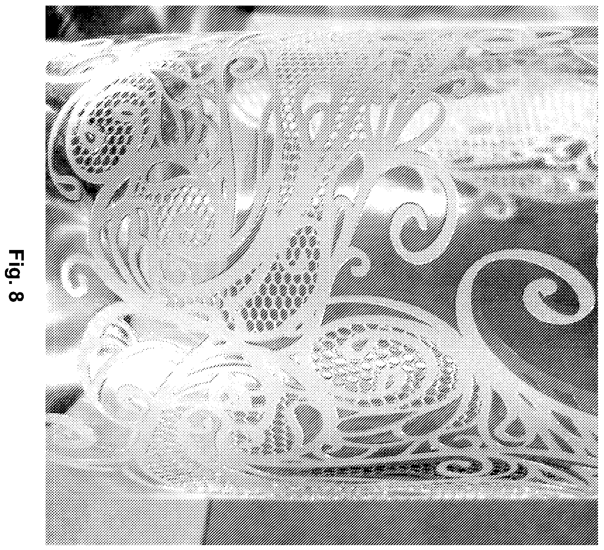

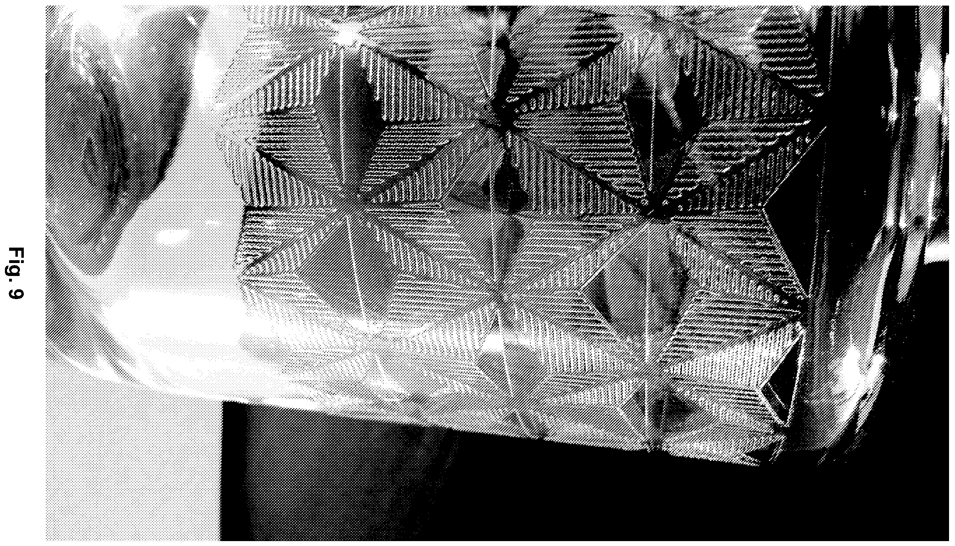

- les figures 7-9 sont des vues d'articles obtenus selon un procédé de l'invention.

### DESCRIPTION DETAILLEE

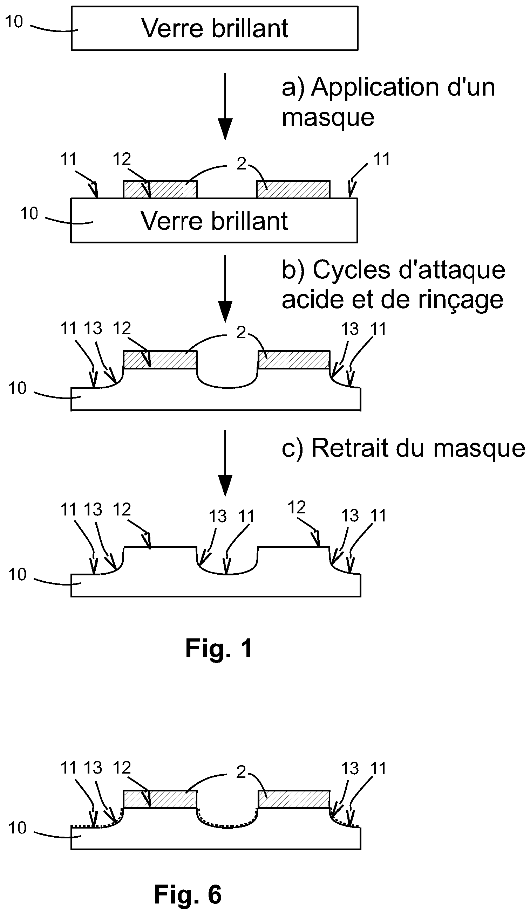

Le procédé selon l'invention s'applique à des articles 1 en verre creux silicosodocalcique tels que des bouteilles, des carafes, des pots, des flacons ou des articles de gobelèterie. Une portion 10 d'un tel article est représentée de manière schématique en section sur la figure 1 qui représente les étapes du procédé selon un premier mode de réalisation. L'article 1 est au départ lisse et brillant. Il reçoit d'abord une couche d'accrochage composée d'un organo-silane, par exemple une couche d' aminopropyltriethoxysilane (AMEO). Puis, dans une étape de masquage a), on applique un masque 2 pour couvrir certaines zones 12 de l'article 1.

Le masque 2 est par exemple issu d'une encre appliquée par sérigraphie, c'est-à-dire à travers une toile comportant un maillage et dont certaines mailles ont été obturées. La toile a par exemple un nombre de mesh de 195 (77 fils/cm), permettant d'obtenir l'application d'une couche d'encre d'une épaisseur de 10 à 20 µm. Cependant tout autre moyen d'application est adapté, tel qu'une projection au pochoir, une application au pinceau ou par transfert. L'encre est par exemple à base d'une résine phénol-formaldéhyde additionnée de tensioactifs de type ammonium quaternaire et d'éthylène-glycol. Une telle encre, à réticulation tridimensionnelle, est résistante aux acides, mais soluble dans une solution alcaline à base de soude. Après son application, l'encre est polymérisée par une exposition thermique ou à un rayonnement ultraviolet.

On réalise ensuite une étape b) comprenant une série de cycles avec une phase d'attaque dans un bain acide suivie d'une phase de rinçage. On obtient alors un article 1 dont les zones non protégées 11 ont diminué d'épaisseur, en laissant ainsi les zones protégées 12 en relief. On retire de l'ordre de 10 µm d'épaisseur à chaque cycle, suivant la durabilité chimique de l'article 1 attaqué, la chimie du bain, sa température et les paramètres du cycle. L'attaque acide est réalisée par exemple dans un bain dans lequel l'article 1 en verre est immergé pendant 5 à 15 secondes, de préférence 10 secondes. Le bain est par exemple composé de la manière suivante :
- acide fluorhydrique à 70 % : 15% en volume,
- acide sulfurique à 96 % : 45 % en volume,
- eau : 40 % en volume.

Ceci correspond à 6,6 mol/l d'acide fluorhydrique (environ 9 % en masse dans le bain) et 8,1 mol/l d'acide sulfurique (environ 56 % en masse dans le bain). Le bain est agité de manière modérée pour éviter des extractions locales de la couche comportant des fluorosilicates insolubles se formant progressivement à la surface des articles, et des défauts de surface consécutifs à des vitesses d'attaque chimique variables à la surface de l'article non protégée par le masque. Le bain est porté et maintenu à une température comprise entre 15 °C et 75 °C, de préférence moins de 45 °C pour obtenir une attaque du verre rapide et pour limiter l'extraction de l'acide fluorhydrique du bain par évaporation (acide très léger). Cette attaque permet de dissoudre de l'ordre de 10 à 100 µm de verre par minute de trempage dans le bain acide.

Le rinçage est réalisé, après extraction de l'article 1 du bain d'acide et transport aérien vers une station de rinçage pendant un temps compris entre 2 et 10 secondes, par un arrosage de l'article 1 avec de l'eau à pression modérée pendant 5 à 15 secondes, de préférence 10 secondes, pour extraire suffisamment la couche passive du substrat tout en limitant l'extraction de celle-ci en périphérie du masque, ceci de manière à créer une attaque chimique anisotropique en périphérie du masque. L'article 1 est par exemple mis en rotation au cours de cette projection. Typiquement, pour une bouteille de forme cylindrique de diamètre 70 mm et d'une surface de 5,5 dm², le débit de fluide de rinçage est compris entre 5 et 15 m³/h avec une pression comprise entre 0,5 et 5 bars, de préférence inférieure à 1 bar pour une distance entre les buses de rinçage et la surface de l'article comprise entre 200 mm et 250 mm. Le rinçage peut également être effectué par trempage dans un bain modérément agité. Le rinçage permet d'éviter toute inhibition du processus d'attaque par passivation sur les zones non protégées, voire une attaque aléatoire qui serait due à l'adhérence variable de la couche de fluorosilicates produits d'une zone à l'autre de la surface à traiter. Cependant, le rinçage n'extrait pas toute la couche de silicates, en en laissant partiellement au niveau des bordures du masque.

Finalement, on réalise une étape de retrait du masque 2. Le retrait est par exemple obtenu en trempant l'article 1 dans un bain agité de lessive de soude de concentration comprise entre 20 et 30 % ou une projection sous pression d'un tel produit à la surface des articles.

Plusieurs expériences ont montré que l'on pouvait dissoudre de cette manière 1,3 à 1,7 gramme de verre par cycle de dissolution sur un article 1 en verre silicosodocalcique de densité approximative 2,50, doté d'un corps cylindrique de diamètre 70 mm, et pour lequel 5,5 dm² de surface a été immergée dans le bain acide, chaque cycle de trempage / rinçage conférant une élévation du décor masqué de 10 à 12 microns par rapport à la nouvelle surface de l'article 1 en verre crée par dissolution chimique. Après 30 cycles successifs, le rayon de l'article 1 cylindrique s'est trouvé diminué de 300 à 370 µm (dissolution de 40 à 50 grammes de verre).

Le temps de séjour des articles 1 dans le bain acide peut être avantageusement progressif, compte tenu de l'évolution de la qualité de surface de l'article 1 au cours des attaques acides b) successives. En effet, la surface initiale de l'article 1 peut être dotée de micro-défauts de surface qui nécessitent une dissolution lente du verre pour éviter des infiltrations et des fragmentations et des fissurations successives de sa surface. Au fur et à mesure des cycles d'attaque, ces micro-défauts disparaissent pour laisser place à une surface polie, exempte de défauts. Les temps de séjour des articles 1 dans le bain d'acides peuvent alors augmenter. Ainsi, le procédé selon l'invention peut par exemple comporter 15 cycles de trempage de 10 secondes et de rinçage de 10 secondes et 15 cycles de trempage de 15 secondes et de rinçage de 10 secondes.

Dans une variante du premier mode de réalisation, une étape de dépolissage chimique est insérée entre l'étape d'attaque acide b) et l'étape de retrait du masque c). Une telle étape est réalisée par un trempage dans un bain spécifique de dépolissage, d'une manière connue en soi et non détaillée ici. Le résultat de cette étape est représenté sur la figure 6, où l'on voit que les surfaces non protégées 11 sont dépolies. Au final, l'article comporte des zones en relief 12 lisses et des zones en creux 11 dépolies.

Dans une autre variante du premier mode de réalisation, l'étape de retrait du masque est suivie par une étape de polissage. Ainsi, la même surface traitée précédemment est soumise aux mêmes types de cycles que dans l'étape d'attaque acide b), mais ceux-ci s'avèrent moins nombreux . On peut ainsi réaliser entre un dixième et un quart des cycles de l'étape b), avec des phases d'attaque et de rinçage de 10 secondes. Les surfaces protégées 12 initialement et non protégées 11 sont érodées de la même manière de telle sorte que la différence de niveau entre elles reste la même. Par contre, la géométrie de la marche évolue de manière à être en pente bien plus faible, ce qui confère un toucher nettement amélioré du décor en relief. D'un autre côté, le décor en relief ainsi créé s'avère poli donc nettement plus brillant que le verre initialement masqué.

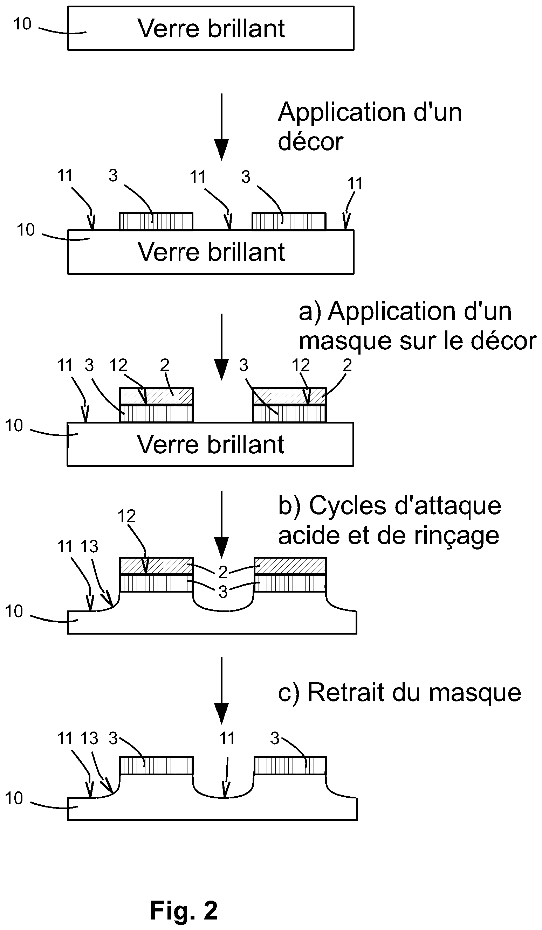

Un deuxième mode de réalisation de l'invention est représenté sur la figure 2. Ce mode de réalisation se distingue du premier mode de réalisation en ce qu'il comporte une étape initiale précédant l'étape d'application du masque 2 par l'application d'un décor 3. Le décor 3 est ensuite recouvert par le masque 2 pour être protégé pendant l'étape d'attaque acide. Les autres étapes ne diffèrent pas de celles du premier mode de réalisation. Au final, lorsque le masque 2 est retiré, le décor 3 réapparaît et se trouve en relief par rapport aux zones lisses et polies qui ont été traitées par l'attaque acide. Le décor 3 est par exemple un revêtement d'encre organique, un émail métallisé ou non, ou une couche métallisée. Les procédés de réalisation de ces décors 3 sont connus et ne sont pas détaillés ici.

Selon une variante du deuxième mode de réalisation, représentée sur la figure 6, on réalise une étape de dépolissage entre l'étape d'attaque b) et l'étape de retrait du masque c). On obtient ainsi un article avec des décors en relief entourés de zones en creux dépolies.

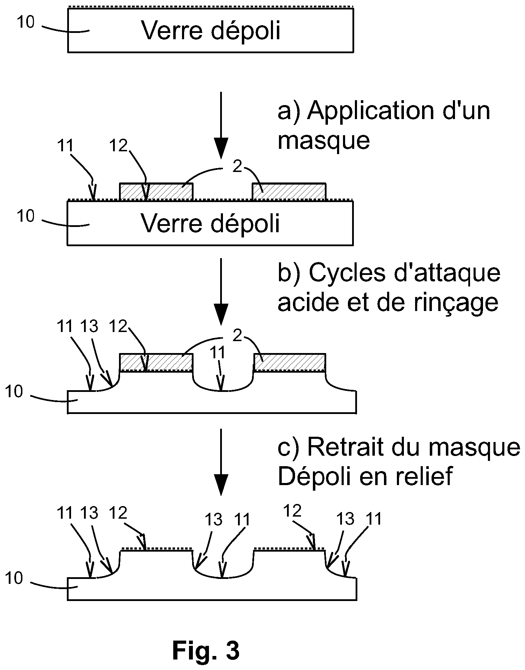

Selon un troisième mode de réalisation de l'invention, tel que représenté sur la figure 3, on applique le procédé tel que décrit au premier mode de réalisation sur un article 1 dont la surface a été traitée préalablement pour être dépolie. Ainsi, les zones dépolies 12 protégées par le masque 2 restent intègres, tandis que les zones non protégées 11 sont attaquées et rendues lisses. A la fin de l'application du procédé, on obtient un article 1 comportant des zones dépolies 12 en relief par rapport à des zones 11 lisses et polies. Dans une variante de ce troisième mode de réalisation de l'invention, l'étape de retrait du masque est suivie par une étape de polissage limitée comme décrit précédemment (variante du premier mode de réalisation de l'invention). On obtient ainsi un décor dépoli en relief, de brillance supérieure à celle de la surface dépolie initialement protégée par le masque, tout en conférant un toucher nettement amélioré du décor en relief. La brillance de ce dernier dépend directement du nombre et des caractéristiques des cycles d'attaque chimique et de rinçages complémentaires réalisés.

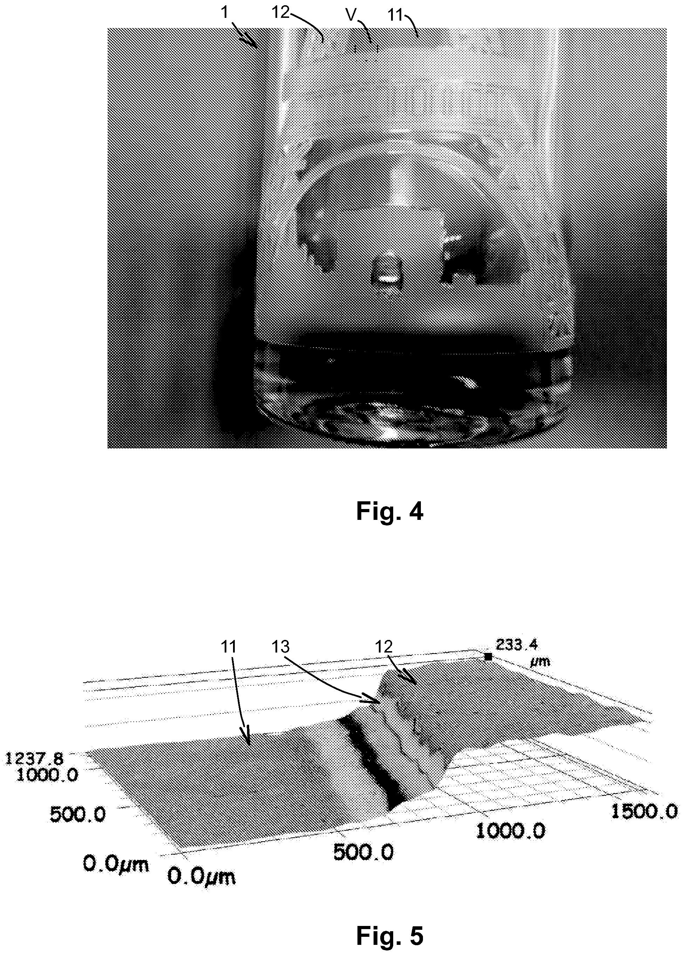

On a aussi appliqué le procédé selon le troisième mode de réalisation à une bouteille de manière à obtenir l'article 1 représenté sur la figure 4. Cet article 1 était initialement entièrement dépoli sur sa surface extérieure. Après application du procédé selon le troisième mode de réalisation, des zones dépolies sont en relief par rapport à des zones lisses et polies. La figure 5 montre le détail V de l'article 1, vu au microscope optique avec reconstruction en trois dimensions. Cette vue montre une marche 13 d'environ 200 à 220 µm entre la zone dépolie et la zone lisse, raccordées par un raccord d'une pente d'environ 70° vers la zone dépolie en relief et en pente douce vers la zone polie en creux.

## Revendications

1. Procédé de réalisation de relief sur un article (1) en verre creux silicosodocalcique, **caractérisé en ce qu'**on procède aux étapes suivantes :
a) application d'un masque (2) résistant à l'attaque d'acides sur des zones protégées (12) de l'article (1) en verre ;
b) application d'une suite de cycles, chaque cycle comprenant : b1) une phase d'attaque acide apte à dissoudre le verre sur les zones non protégées (11) ; et b2) une phase de rinçage pour éliminer le verre dissous et les résidus de l'attaque acide ;
c) élimination du masque (2).

2. Procédé selon la revendication 1, selon lequel la phase d'attaque b1) est un trempage de l'article (1) dans un bain d'une durée comprise entre 5 et 20 secondes, de préférence 10 secondes.

3. Procédé selon la revendication 1 ou 2, selon lequel la phase de rinçage b2) est réalisée à l'eau.

4. Procédé selon la revendication 3, selon lequel l'eau de rinçage est utilisée en boucle fermée.

5. Procédé selon l'une des revendications précédentes, selon lequel la phase de rinçage b2) a une durée comprise entre 5 et 15 secondes, de préférence 10 secondes.

6. Procédé selon l'une des revendications précédentes, dans lequel la phase d'attaque acide est réalisée dans un bain comportant de l'acide fluorhydrique et un co-acide fort.

7. Procédé selon la revendication 6, dans lequel le co-acide est de l'acide sulfurique.

8. Procédé selon la revendication 6, dans lequel le rapport entre la masse d'acide sulfurique et la masse d'acide fluorhydrique est compris entre 1,8 et 18.

9. Procédé selon la revendication 7 ou 8, selon lequel le bain d'acide comporte entre 30 % et 70% massique d'acide sulfurique, entre 3 et 17 % massiques d'acide fluorhydrique et un complément d'eau.

10. Procédé selon l'une des revendications 6 à 9, dans lequel la température du bain d'acide est comprise entre 15 et 75°C, de préférence entre 20 et 45 °C.

11. Procédé selon l'une des revendications précédentes, dans lequel l'article est revêtu d'une couche d'accrochage avant l'application du masque, la couche d'accrochage étant composée d'un organo-silane, par exemple de aminopropyltriethoxysilane (AMEO).

12. Procédé selon l'une des revendications précédentes, dans lequel l'article est revêtu d'une couche de préparation avant l'application du masque, la couche de préparation étant un dépôt de silice à la flamme.

13. Procédé selon l'une des revendications précédentes, dans lequel l'article (1) est satiné avant l'étape de masquage par un satinage chimique ou mécanique.

14. Procédé selon l'une des revendications précédentes, dans lequel l'étape de masquage a) est précédée d'une étape de dépose de décors (3) sur le verre, le masque (2) étant appliqué sur les décors (3).

15. Procédé selon la revendication 14, dans lequel le décor (3) est un revêtement d'encre organique, un émail métallisé ou non, ou une couche métallisée.

16. Procédé selon l'une des revendications 1 à 12, dans lequel l'article (1) est satiné chimiquement entre l'étape d'attaque acide b) et l'étape d'élimination du masque (2).

17. Procédé selon l'une des revendications 1 à 13, dans lequel on procède après l'enlèvement du masque (2) à une étape de polissage chimique sur l'ensemble de la surface de l'article (1).

18. Procédé selon la revendication 1, ledit procédé comprenant en outre une étape intermédiaire a'), entre l'étape a) et l'étape b), dans laquelle on procède à une extraction partielle du masque.

19. Procédé selon la revendication 18, dans lequel l'extraction partielle du masque est réalisée par projection locale de média organique ou par ablation laser.

20. Article en verre creux obtenu selon le procédé de l'une des revendications 1 à 19, et **caractérisé en ce qu'**il comporte des zones dépolies en relief d'épaisseur variant d'une vingtaine à plusieurs centaines de micromètres par rapport à des zones lisses et polies.

## Patentansprüche

1. Verfahren zur Herstellung eines Reliefs auf einem hohlen Gegenstand aus Kalk-Natron-Glas (1), **dadurch gekennzeichnet, dass** die folgenden Schritte durchgeführt werden:
a) Aufbringen einer säureresistenten Maske (2) auf geschützte Bereiche (12) des Glasartikels (1);
b) Anwendung einer Reihe von Zyklen, wobei jeder Zyklus umfasst: b1) eine Säureangriffsphase, die geeignet ist, das Glas auf den ungeschützten Bereichen (11) aufzulösen; und b2) eine Spülphase, um das aufgelöste Glas und die Rückstände der Säureätzung zu entfernen;
c) das Entfernen der Maske (2).

2. Verfahren nach Anspruch 1, bei dem die Angriffsphase b1) ein Eintauchen des Gegenstandes (1) in ein Bad für eine Dauer zwischen 5 und 20 Sekunden, vorzugsweise 10 Sekunden, ist.

3. Verfahren nach Anspruch 1 oder 2, wobei die Spülphase b2) mit Wasser durchgeführt wird.

4. Verfahren nach Anspruch 3, wobei das Spülwasser in einem geschlossenen Kreislauf verwendet wird.

5. Verfahren nach einem der vorhergehenden Ansprüche, wobei die Spülphase b2) eine Dauer zwischen 5 und 15 Sekunden, vorzugsweise 10 Sekunden hat.

6. Verfahren nach einem der vorhergehenden Ansprüche, wobei die Säureangriffsphase in einem Bad durchgeführt wird, das Fluorwasserstoffsäure und eine starke Co-Säure enthält.

7. Verfahren nach Anspruch 6, wobei die Co-Säure Schwefelsäure ist.

8. Verfahren nach Anspruch 6, wobei das Verhältnis der Masse der Schwefelsäure zur Masse der Flusssäure zwischen 1,8 und 18 liegt.

9. Verfahren nach Anspruch 7 oder 8, wobei das Säurebad zwischen 30 und 70 Gew.-% Schwefelsäure, zwischen 3 und 17 Gew.-% Fluorwasserstoffsäure und als Rest Wasser enthält.

10. Verfahren nach einem der Ansprüche 6 bis 9, wobei die Temperatur des Säurebades zwischen 15 und 75°C, vorzugsweise zwischen 20 und 45°C liegt.

11. Verfahren nach einem der vorhergehenden Ansprüche, bei dem der Gegenstand vor dem Aufbringen der Maske mit einer Haftschicht beschichtet wird, wobei die Haftschicht aus einem Organosilan, beispielsweise Aminopropyltriethoxysilan (AMEO), besteht.

12. Verfahren nach einem der vorhergehenden Ansprüche, bei dem der Gegenstand vor dem Aufbringen der Maske mit einer Präparationsschicht beschichtet wird, wobei die Präparationsschicht eine Siliziumdioxid-Flammbeschichtung ist.

13. Verfahren nach einem der vorhergehenden Ansprüche, wobei der Gegenstand (1) vor dem Maskierungsschritt durch chemisches oder mechanisches Satinieren satiniert wird.

14. Verfahren nach einem der vorhergehenden Ansprüche, bei dem dem Maskierungsschritt a) ein Schritt des Aufbringens von Dekorationen (3) auf das Glas vorausgeht, wobei die Maske (2) auf die Dekorationen (3) aufgebracht wird.

15. Verfahren nach Anspruch 14, wobei die Dekoration (3) eine organische Tintenbeschichtung, eine metallisierte oder nicht metallisierte Emaille oder eine metallisierte Schicht ist.

16. Verfahren nach einem der Ansprüche 1 bis 12, wobei der Gegenstand (1) zwischen dem Säureangriffsphase b) und dem Schritt des Entfernens der Maske (2) chemisch satiniert wird.

17. Verfahren nach einem der Ansprüche 1 bis 13, bei dem nach Entfernen der Maske (2) ein chemischer Polierschritt auf der gesamten Oberfläche des Gegenstandes (1) durchgeführt wird.

18. Verfahren nach Anspruch 1, wobei das Verfahren ferner einen Zwischenschritt a') zwischen Schritt a) und Schritt b) umfasst, in dem eine teilweise Extraktion der Maske durchgeführt wird.

19. Verfahren nach Anspruch 18, wobei die teilweise Entfernung der Maske durch lokale Projektion von organischen Medien oder durch Laserablation erfolgt.

20. Hohlglasgegenstand, der nach dem Verfahren nach einem der Ansprüche 1 bis 19 erhalten wird, **dadurch gekennzeichnet, dass** er mattierte, reliefartige Bereiche mit einer Dicke von etwa zwanzig bis zu mehreren hundert Mikrometern gegenüber glatten und polierten Bereichen aufweist.

## Claims

1. Method for producing relief structures on a hollow silicosodocalcic glass article (1), **characterized in that** the following steps are carried out:
a) application of a mask (2) which is resistant to the attack of acids to areas to be protected (12) of the glass article (1);
b) application of a sequence of cycles, each cycle comprising: b1) an acid attack phase that can dissolve the glass on the non-protected areas (11); and b2) a rinsing phase for removing the dissolved glass and the residues of the acid attack;
c) removing the mask (2).

2. Method according to claim 1, according to which the attack phase b1) is a soaking of the article (1) in a bath of a duration between 5 and 20 seconds, preferably 10 seconds.

3. Method according to claim 1 or 2, according to which the rinsing phase b2) is carried out with water.

4. Method according to claim 3, according to which the rinsing water is used in a closed loop.

5. Method according to one of the preceding claims, according to which the rinsing phase b2) has a duration between 5 and 15 seconds, preferably 10 seconds.

6. Method according to one of the preceding claims, wherein the acid attack phase is carried out in a bath comprising hydrofluoric acid and a strong co-acid.

7. Method according to claim 6, wherein the co-acid is sulfuric acid.

8. Method according to claim 6, wherein the ratio of the mass of sulfuric acid to the mass of hydrofluoric acid is between 1.8 and 18.

9. Method according to claim 7 or 8, according to which the acid bath comprises between 30% and 70% by weight of sulfuric acid, between 3% and 17% by weight of hydrofluoric acid and a complement of water.

10. Method according to one of claims 6 to 9, wherein the temperature of the acid bath is between 15 and 75°C, preferably between 20 and 45°C.

11. Method according to one of the preceding claims, wherein the article is coated with a bonding layer before application of the mask, the bonding layer being composed of an organo-silane, for example an aminopropyltriethoxysilane (AMEO).

12. Method according to one of the preceding claims, wherein the article is coated with a pre-coat before application of the mask, the pre-coat being a flame deposit of silica.

13. Method according to one of the preceding claims, wherein the article (1) is satin-finished before the masking step by a mechanical or chemical satin finish.

14. Method according to one of the preceding claims, wherein the masking step a) is preceded by a step of depositing decorations (3) on the glass, the mask (2) being applied to the decorations (3).

15. Method according to claim 14, wherein the decoration (3) is a coating of organic ink, a metallized enamel or not, or a metallized layer.

16. Method according to any one of claims 1 to 12, wherein the article (1) is chemically satin-finished between the step of acid attack b) and the step of removing the mask (2).

17. Method according to one of claims 1 to 13, wherein after the removal of the mask, a chemical polishing step is carried out over the entire surface of the article (1).

18. Method according to claim 1, said method further comprising an intermediate step a'), between step a) and step b), wherein a partial extraction of the mask is carried out.

19. Method according to claim 18, wherein the partial extraction of the mask is carried out by local projection of organic media or by laser ablation.

20. Hollow glass article obtainable by a method according to one of claims 1 to 19, and **characterized in that** it comprises embossed relief areas of thickness varying from about twenty to several hundred micrometers with respect to smooth and polished areas.
